# EUROPEAN PATENT APPLICATION

(11) **EP 2 602 150 A1**
(43) Date of publication of application: **12.06.2013**
(21) Application number: 11009761.5
(22) Date of filing: 10.12.2011
(51) Int. Cl.: B60N 2/30

(54) **Vehicle seat**

(71) Applicant: Autoliv Development AB, 447 83 Vårgårda (SE)
(72) Inventor: Kuntzsch, Stefan, 524 96 Ljung (SE)
(74) Representative: Schön, Thilo

(57) **Abstract**

A vehicle seat comprising a first squab (10) and a seat back (20) is described. The seat back (20) has a fixed part (22) and a movable part (30) comprising a first element (32) that can be pivoted relative to the fixed part (22), such that in a first configuration the seat forms an adult seat, and in a second configuration the seat form a child seat with a second squab (46) that is raised relative to the first squab (10), wherein said second squab (46) is formed of a section of the movable part. In order to achieve that the second squab can be considerably higher than the first squab, the movable part (30) is comprised of at least two elements (32, 40) being arranged in line in the first configuration and lying on top of one another in the second configuration (Figure 2).

## Description

The invention is concerned with a vehicle seat with an integrated child seat according to the preamble of claim 1.

It is well known in the art that a small child needs a higher seating position on a vehicle seat as an adult in order to be properly protected by the seat belt. The most common method in order to achieve this higher seating position is to provide a separate child seat. Further, it is known in the art to provide a vehicle seat with an integrated child seat such that in a first configuration the vehicle seat is ideal for being used by an adult and in a second configuration a higher seating position can be provided for a child. Two basic structures for this are known:

In a first structure, a mechanism is provided that rises the squab of the seat or part of the squab such that the squab itself can be raised into a higher position. The mechanism needed for this is rather expensive.

In a second structure, it is known that a part of the seat back - hereinafter referred to as the movable part - can be pivoted around an axis such that in the second configuration this movable part of the seat back serves as a squab for a child (herein after referred to as the second squab). One example of such a vehicle seat is known from GB 2 272 832 A1. Here, a rather high seating position for a child can be achieved, but a sturdy mechanism is needed, which makes the vehicle seat rather expensive.

From generic GB 2 243 072 A, a simple example of such a vehicle seat is known. The drawback is, that the gain in height of the seating position is limited.

A further advantage of this second structure is that the child is seated relatively far away from the seat back of the seat in front of the child. The further away from this seat back the child is seated the less is the possibility that its head strikes the seat back during a frontal crash.

Starting from this, the present invention sets itself the problem to improve the prior art in such a way that a considerable gain in height can be achieved with simple mechanics, such that the vehicle seat can be produced very cost effectively.

This problem is solved by a vehicle seat according to claim 1.

The vehicle seat according to the invention comprises a first squab and a seat back, wherein the seat back has a fixed part and a movable part comprising a first element that can be pivoted relative to the fixed part, such that in a first configuration the seat forms an adult seat and in a second configuration the seat form a child seat with a second squab that is raised relative to the first squab. Said second squab is formed of a section of the movable part. In order to provide a child's seating position that is considerably higher than the seating position of an adult, the movable part is comprised of at least two elements being arranged in line in the first configuration and lying on top of one another in the second configuration. So, in the second configuration the upper element of the movable part is supported by the lower element of the movable part. Because of this no additional supporting structure is needed.

Preferred embodiments result from the sub-claims and all advantages of the invention will become apparent in view of the example embodiment described now in view of the accompanying figures.

The figures show:
- Figure 1: a sectional view of a vehicle seat in a first configuration,
- Figure 2: the vehicle seat of Figure 1 in a second configuration,
- Figure 3: a sectional view along line A-A in Figure 1, and
- Figure 4: a top view in direction R of what is shown in figure 2.

For the following description of the preferred embodiment reference is made to all of the four figures.

As every vehicle seat, the vehicle seat according to invention comprises a squab - herein after referred to as the first squab 10 - and a seat back 20. If the vehicle seat is the rear bench of a passenger car (this is the most important application of this invention), the seat back 20 may be pivotable around an axis in order to enlarge a trunk of the vehicle as is well known in the prior art. If the vehicle seat is a single seat, the inclination of the backrest 20 may be adjustable as is also known in the prior art.

The seat back 20 comprises a fixed part 22 and a movable part 30. This movable part is comprised of a first element 32 and a second element 40. It should be noted here, that the expression "fixed part" does not mean that the backrest 20 as a whole can not be pivoted, as it is described above. The expression "fixed part" is chosen, because the first and the second element 32, 40 of the movable part 30 can be moved in relation to the fixed part 22.

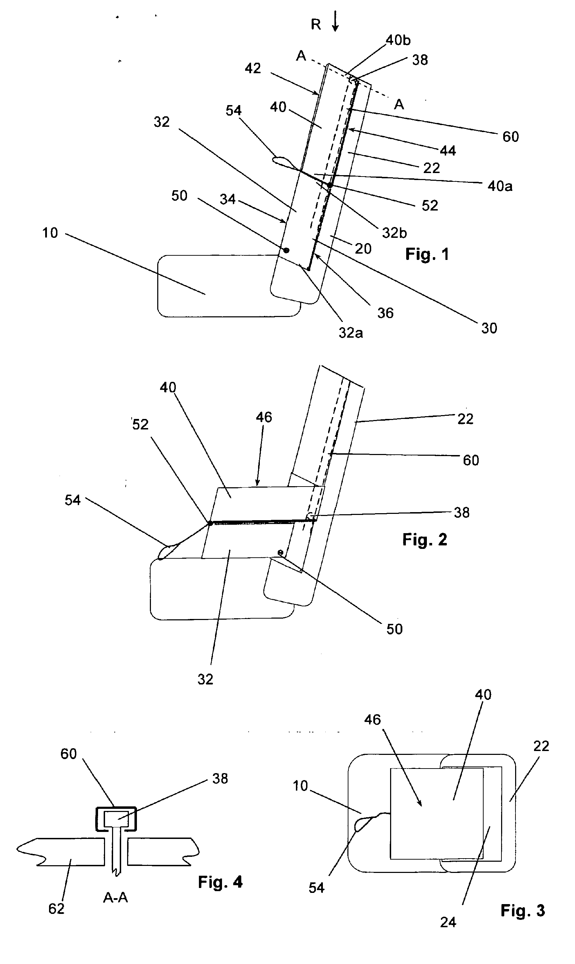

Both elements 32, 40, each have a first end 32a, 40a (the lower end) and a second end 32b, 40b (the upper end). Both, the first element 32 and the second element 40 are preferably at least in part made of a foam type material. Especially, the areas of the first surfaces 34, 42 - the surfaces pointing towards the inside of the vehicle when the vehicle seat in its first configuration as shown in Figure 1 - should consist of such a foam type, soft material forming a cushioning. The first element 32 is connected to the fixed part 22 via a first hinge 50. This first hinge 50 is provided in the area of the first end 32a near the first surface 32. As an alternative, the first hinge 50 could be provided between the first end 32a of the first element 32 and a rear end of the first squab. The second element 40 is connected to the first element 32 via a second hinge 52 which extends parallel to the first hinge 30 at the second end 32b of the first element 32 and the first end 40a of the second element 40. This second hinge 52 is located opposite to the first surfaces 32, 42 (near the second surfaces 36, 44).

A strap 54 serving as a pull element is connected to the second hinge 52 and/or to the first element 32 and/or the second element 40 near this second hinge 52. Both hinges 50, 52 extend horizontally and transverse to the longitudinal direction of the vehicle. The second element 40 is further connected to the fixed part 22 via a sliding part on each side of the second element 40 being in sliding connection to a sliding rail 60 of the fixed part 23. Due to the sectional representations, only one sliding part 38 and only one sliding rail 60 is shown in the figures. In very cost effective embodiments, it may be possible not to provide such a sliding connection between the second element 40 and the fixed part 22. In this case the second element 40 may be held in place only via clamping forces. In the embodiment shown the sliding rails 60 are positioned in side walls of the fixed part and have a C-shaped cross section, as is shown in Figure 4. Each sliding part 38 is received in a sliding rail 60. At this point it needs to be mentioned that other sliding connections between the second end 40b of the second element 40 and the fixed part 22 are possible.

As has already been mentioned, Figure 1 and Figure 3 show the first configuration. This is the configuration in which the vehicle seat is intended to be used by an adult. Here, the first element 32 and the second element 40 are located "in line", such that their first surfaces 32, 42 are basically within one plane and point towards the inside of the vehicle, such that the first surfaces 32, 42 form a part of the seat back 20 to be used by the passenger.

The transforming of the vehicle seat into a vehicle seat with a raised squab, such that it can be used by a child, is very easy: In pulling the strap 54, the first element 32 pivotes around the first hinge 50, the second element 40 pivotes around the moving second hinge 52 while its second end slides down the fixed part 22. So, a kind of accordion- or Z- folding takes place. At the end of this folding, the first element 32 comes to rest onto the first squab 10 and the second element 40 comes to rest on the first element 32, such that the first element 32 supports the second element 40. The first surface 42 of the second element 40 points upwards such that it forms a second squab 46, especially for a child.

As one can see especially from Figure 3, the fixed part 22 has preferably a U-shape cross-section, such that in the second configuration it provides a cavity 24. It is preferred that the inner walls of this cavity have a cushioning 62 (see for example Figure 4) so that they are relatively soft. So, the rear side of this cavity can directly be used as the seat back for a child when the vehicle seat is in its second configuration and further a good additional protection is given, since the side walls of this cavity help keeping the child in place during a side collision. The side walls can be slanted relative to the rear side and/or they can be rounded in a transitional area between the each side wall and the rear side in order to provide a better comfort.

### List of reference numbers

- 10: first squab
- 20: seat back
- 22: fixed part
- 24: cavity
- 30: movable part
- 32: first element
- 32a: first end
- 32b: second end
- 34: first surface
- 36: second surface
- 38: sliding part
- 40: second element
- 40a: first end
- 40b: second end
- 42: first surface
- 44: second surface
- 46: second squab
- 50: first hinge
- 52: second hinge
- 54: strap (pull element)
- 60: sliding rail
- 62: cushioning

## Claims

1. Vehicle seat comprising a first squab (10) and a seat back (20),
wherein the seat back (20) has a fixed part (22) and a movable part (30) comprising a first element (32) that can be pivoted relative to the fixed part (22) such that in a first configuration the seat forms an adult seat, and in a second configuration the seat forms a child seat with a second squab (46) that is raised relative to the first squab (10), said second squab (46) being formed of a section of the movable part,
**characterised in that** the movable part (30) is comprised of at least two elements (32, 40) being arranged in line in the first configuration and lying on top of one another in the second configuration.

2. Vehicle seat according to claim 1, **characterised in that** the first element (32) of the movable part (30) lies onto the first squab (10) in the first configuration.

3. Vehicle seat according to one of the preceding claims, **characterised in that** the first element (32) of the movable part (30) is connected to the fixed part (22) of the seat back (20) or to the first squab via a first hinge (50) and to the second element (40) of the movable part (30) via a second hinge (52) being remote and parallel to the first hinge (50).

4. Vehicle seat according to claim 3, **characterised in that** the first hinge (50) is disposed on a first end (32a) of the first element (32) and that the second hinge (52) is disposed on a second end (32b) of the first element (32) and on a first end (40a) of the second element (40).

5. Vehicle seat according to claim 4, **characterised in that** a second end (40b) of the second element (40) is connected to the fixed part (22) of the seat back (20) in a sliding manner.

6. Vehicle seat according to claim 4, **characterised in that** the second element (40) is at least in the second configuration only connected to the first element (32).

7. Vehicle seat according to one of the preceding claims, **characterised in that** a cavity (24) is formed in the fixed part (22) in the second configuration.

8. Vehicle seat according to claim 7, **characterised in that** the inner walls of the cavity have a cushioning (62).

9. Vehicle seat according to one of the preceding claims, **characterised in that** it is a seat bench.
